# EUROPEAN PATENT APPLICATION

(11) **EP 3 104 226 A1**
(43) Date of publication of application: **14.12.2016**
(21) Application number: 15746678.0
(22) Date of filing: 04.02.2015
(51) Int. Cl.: G03G 9/12, G03G 9/13

(54) **LIQUID DEVELOPER**

(30) Priority: 04.02.2014 JP 2014019838
(71) Applicant: Sakata INX Corp., Osaka-shi, Osaka 550-0002 (JP)
(72) Inventor: OKAMOTO Katsutoshi, Osaka-shi Osaka 550-0002 (JP); MAEDA Hirohito, Osaka-shi Osaka 550-0002 (JP); INOUE Tomoaki, Osaka-shi Osaka 550-0002 (JP); KAWABATA Jun, Osaka-shi Osaka 550-0002 (JP)
(74) Representative: Grünecker Patent- und Rechtsanwälte PartG mbB
(86) International application number: PCT/JP2015/053086
(87) International publication number: WO 2015/119147

(57) **Abstract**

An object of the present invention is to provide a liquid developer for electrophotography or electrostatic recording, demonstrating good particle uniformity, preservation stability, fixing property, and electrophoretic migration property. To achieve the aforementioned object, the present invention provides a liquid developer that contains colored resin particles granulated by utilizing the coacervation method, from at least an acid carbon black as pigment, binder resin containing acid group-containing resin, basic group-containing pigment dispersion agent, pigment dispersion aid which is an acid pigment derivative and accounts for 0.1 to 10.0 parts by mass per 100 parts by mass of the pigment, and granulating aid, wherein the colored resin particles are dispersed in an insulating solvent by means of a particle dispersion agent.

## Description

### Technical Field

The present invention relates to a liquid developer for electrophotography or electrostatic recording used for printing presses, copiers, printers, facsimiles, etc.

### Background Art

The electrophotography method is a method for forming a colored image characterized in that an electrostatic latent image is formed on a photosensitive surface and then a developer (generally called "toner") constituted by colored resin particles is deposited to develop the image by utilizing the electrostatic attraction force or repulsive force, after which the developer is transferred onto a base material for printing and fixed by means of heat or pressure, an overview of which is provided below.

First, the entire surface of a photosensitive material characterized in that it is an insulator in a dark environment but changes to a conductor in a bright environment, is charged with electricity in a dark environment. Then, according to the image to be printed, areas corresponding to non-image parts (or image parts) of the photosensitive material are irradiated with light (charged with electricity) to cause the electric charges to disappear, thus selectively providing charged areas and non-charged areas on the surface of the photosensitive material to form an electrostatic latent image. Next, a developer constituted by colored resin particles is charged with electricity of the polarity opposite the electrical charges of the photosensitive material, so that it is deposited by means of electrostatic force (if the non-image parts are charged with electricity, the developer is charged with the electricity of the same polarity to be repulsive so that it is pushed into the image parts only), and the electrostatic latent image is developed as a result. Lastly, the developer is transferred from the surface of the photosensitive material to a base material for printing, after which heat or pressure is applied to fix the developer to form a colored image.

Such electrophotography method allows for a coloring agent to be deposited at any desired positions on a photosensitive material and therefore it is suitable, despite the printing speed being insufficient, for creating a small number of copies, down to a single copy, of a printed product (containing different images) compared to the method of using printing plates to deposit a coloring agent always at fixed locations. For this feature, the electrophotography method is utilized primarily for copiers, printers, facsimiles, etc., for business use.

Developers used under the electrophotography method are largely classified into dry developers in a powder state, and liquid developers constituted by liquid in which powder is dispersed. Dry developers are traditionally used when it comes to the electrophotography method. Using a developer of smaller particle size is advantageous in obtaining a high-definition printed product, but because the inter-adhesion force of particles increases as the particle size decreases and this makes it difficult to maintain appropriate fluidity, and also because scattering of powder presents a labor health issue (pneumoconiosis, etc.), the minimum particle size of dry developer is 5 µm or so. On the other hand, liquid developers do not scatter, and allow sufficient fluidity to be maintained because particles are dispersed in liquid. Accordingly, liquid developers can comprise particles smaller than 1 µm, which makes it easy to obtain high-quality images.

Additionally, for liquid developers, generally those made by dispersing colored resin particles containing pigment or other coloring agent (may be hereinafter referred to as "toner particles"), in an insulating solvent, are used.

The coacervation method (deposition method) is one way to manufacture colored resin particles for such liquid developers.

Under the coacervation method, a coloring agent (pigment), resin (binder resin), organic solvent that dissolves the resin, and insulating solvent that does not dissolve the resin are used to create a mixed liquid of the organic solvent that contains the dispersed pigment in a fine particle state and the dissolved resin, and the insulating solvent, from which the organic solvent is removed or to which insulating solvent is added (in many cases the organic solvent has been removed in the final composition), thereby causing the resin to deposit and dispersing in the insulating solvent, resultant resin particles (toner particles) in which the coloring agent has been encapsulated.

The colored resin particles which are toner particles, obtained by this method, are shaped more like a sphere and have a uniform particle size, so it is considered that, when such particles are used in a liquid developer, the projected area relative to the direction of electrophoretic migration also becomes uniform and good electrophoretic migration property is achieved. In particular, the toner particles migrate electrophoretically through the insulating solvent by means of electrostatic force and eventually deposit onto the surface of the photosensitive material to develop an image, and therefore the uniformity of electrophoretic speed, etc., of each particle provides important performance in obtaining an upgraded printed product.

However, the coacervation method requires that, when the resin deposits to form colored resin particles, the coloring agent be encapsulated inside the particles without fail. If the pigment is exposed to the surface of the toner particles which are colored resin particles, the charging characteristics may vary, for example, primarily due to the effect of the dispersion agent adsorbed onto the surface of the coloring agent, which may in turn cause the electrophoretic migration property to differ among the toner particles, preventing upgraded printing.

In addition, increasing the pigment concentration to raise the printing density causes the electrophoretic migration property to drop, the result of which is that sufficient electrophoretic migration property cannot be obtained.

Accordingly, to solve the aforementioned problems, methods are proposed whereby a high-molecular-weight compound containing acid group and high-molecular-weight compound containing basic group are utilized in such a way that one of the compounds is adsorbed onto the pigment surface first, and then the colored resin particles encapsulated in the other high-molecular-weight compound are dispersed in the insulating solvent (refer to Patent Literature 1, for example).

Under these methods, however, the insufficient uniformity of particle size causes the electrophoretic migration property to vary, while dispersion stability is not sufficient, either, overtime.

Accordingly, the applicant of the present application has proposed liquid developers, each comprising at least a pigment, a dispersion agent whose molecule contains at least one basic group-containing group as well as a carbodiimide compound to which a polyester chain has been introduced through reaction with the carbodiimide group, and colored resin particles constituted by acid group-containing resin, which are dispersed in an insulating solvent (refer to Patent Literature 2, for example).

This method improves the uniformity of particle size and dispersion stability over time, but since the compound containing carbodiimide group is used as a pigment dispersion agent here, it is adsorbed onto the pigment surface and the possibility of it reacting with the acid group on the resin particle surface is low.

Also, because the main binder resin is not very compatible with the acid group-containing resin, the resin may not deposit stably at the surface of the coloring agent and the particle sizes may distribute widely and become non-uniform, or the particle formability (granulation property) may even drop under a condition where many acid groups remain not interacting with basic groups, which creates a recent demand for further improvements in order to improve the image quality of printed products further.

As described in Patent Literature 3, liquid developers that contain toner particles and an insulating liquid wherein the toner particles contain a resin, pigment, and pigment dispersion agent, the pigment contains an acid carbon black and basic copper phthalocyanine pigment derivative, and the pigment dispersion agent is a basic dispersion agent, are known. However, sufficient electrophoretic migration property cannot be obtained by these means, either, because increasing the pigment concentration to raise the printing density still causes the electrophoretic migration property to drop.

Particularly under the electrophotography method utilizing a liquid developer, an image is developed when the toner particles migrate electrophoretically through the insulating solvent by means of the electrostatic force acting between the charged areas on a photo sensitive material and the toner particles charged to different polarities, and eventually they deposit onto the surface of the photosensitive material. Accordingly, the electrophoretic migration property of toner particles is one performance directly tied to the accuracy of development, or specifically a property of upgraded printing. In light of today's demand for upgraded printed products at high levels, it is necessary to prevent the electrophoretic migration property from dropping when the concentration of resin particles is increased, in order to utilize the aforementioned acid-base interaction while achieving further technical improvements at the same time.

### Background Art Literature

### Patent Literature

Patent Literature 1: Japanese Patent Laid-open No. 2001-31900
Patent Literature 2: Re-publication of International Patent Laid-open No. WO 2007-061072
Patent Literature 3: Japanese Patent Laid-open No. 2013-105035

### Summary of the Invention

### Problems to Be Solved by the Invention

Accordingly, an object of the present invention is to provide a liquid developer for electrophotography or electrostatic recording, wherein increasing the concentration of colored resin particles does not cause the electrophoretic migration property to drop.

### Means for Solving the Problems

The applicant of the present application studied in earnest to achieve the aforementioned object and developed a liquid developer that achieves all the objects of the present invention by applying a new concept, which is to use a pigment dispersion aid in the colored resin particles under the coacervation method, and completed the present invention accordingly.
1. A liquid developer that contains colored resin particles granulated by utilizing the coacervation method, from at least an acid carbon black as pigment, binder resin containing acid group-containing resin, basic group-containing pigment dispersion agent, pigment dispersion aid which is an acid pigment derivative and accounts for 0.1 to 10.0 parts by mass per 100 parts by mass of the pigment, and granulating aid, wherein the colored resin particles are dispersed in an insulating solvent by means of a particle dispersion agent.
2. A liquid developer according to 1, characterized in that the acid pigment derivative is constituted by at least one type of derivative selected from among anthraquinone acid pigment derivative, naphthalene acid pigment derivative, and phthalocyanine acid pigment derivative.

### Effects of the Invention

With respect to a liquid developer whose colored resin particles are granulated by utilizing the coacervation method, from at least an acid carbon black, binder resin containing acid group-containing resin, basic group-containing pigment dispersion agent, pigment dispersion aid, and granulating aid, wherein the colored resin particles are dispersed in an insulating solvent by means of a particle dispersion agent, a liquid developer demonstrating particle uniformity, preservation stability, and fixing property, and, in particular, sufficient electrophoretic migration property even when the colored resin particles are concentrated highly, can be obtained by constituting the pigment dispersion aid from an acid pigment derivative.

### Mode for Carrying Out the Invention

The liquid developer proposed by the present invention is explained in detail below.

### (Colored Resin Particles)

The colored resin particles under the present invention are obtained by the coacervation method. According to the coacervation method, the obtained colored resin particles are shaped more like a sphere and their particle sizes are also uniform, which is desirable. To encapsulate the coloring agent when the dissolved resin deposits, a required condition is for the resin to deposit in a stable manner on the surface of the coloring agent. Another required condition is for the entire coloring agent to be encapsulated in the resin particles because if some coloring agent is not encapsulated in the resin and remains as such, the insulating solvent itself will be colored and the color will be added to where no colored resin particles are present. Furthermore, if the coloring agent is not completely encapsulated in the resin particles and some gets exposed on the surface, the resin particles may have a wide size distribution and uniform particles may not be obtained.

### (Pigment)

For the acid carbon black to be contained in the colored resin particle, any known acid carbon black can be used. Specific examples of the acid carbon black include MA7, MA8, MA11, MA14, MA285, #1000, #2350, and the like, manufactured by Mitsubishi Chemical, Special Black 350, Special Black 250 and Special Black 550, among others, manufactured by Degussa, MOGUL L, LEGAL 400R, and the like, manufactured by Cabot, and RAVEN 1200, RAVEN 1250, RAVEN 1255, RAVEN 1190U, RAVEN 1170, RAEN 1035, RAVEN 1080U, RAVEN 1060U, RAVEN 1100U, and the like, manufactured by Columbian Carbon.

Among the aforementioned acid carbon blacks, those of pH5 or below having carboxyl group or other acid group are preferred.

Under the present invention, the content of such acid carbon blacks is not limited in any way; from the viewpoint of image density, however, preferably it is 5 to 70 percent by mass in the final colored resin particle.

### (Basic Group-containing Pigment Dispersion Agent)

Basic group-containing pigment dispersion agent can be used as the pigment dispersion agent under the present invention.

It should be noted that the basic group-containing pigment dispersion agent dissolves in the organic solvent described later, but not in the insulating solvent.

For the basic group-containing pigment dispersion agent used to disperse the aforementioned pigment as a content of the colored resin particle, any known basic group-containing pigment dispersion agents can be used except for the granulating aid described below.

Specific examples of the basic group-containing pigment dispersion agent include basic group-containing polyurethane resin, basic group-containing polyester resin, and (poly)amine derivative constituted by (poly)amine compound with polyester introduced to its amino group and/or imino group, for instance. Also, commercially available products of the pigment dispersion agent include BYK-160, 162, 164, 182 (manufactured by BYK), EFKA-47 (manufactured by EFKA), Ajisper PB-821, 822 (manufactured by Ajinomoto), and Solsperse 24000 (manufactured by Zeneca), for example. Under the present invention, these basic group-containing pigment dispersion agents can be used alone or two or more of them can be combined as necessary. The content of any such basic group-containing pigment dispersion agent is not limited in any way, but is preferably 10 to 100 parts by mass relative to 100 parts by mass of the pigment. If the content is less than 10 parts by mass, the colored resin particles may not disperse sufficiently in the colored resin particle dispersion product to be manufactured; if the content exceeds 100 parts by mass, on the other hand, printability may be affected. A more preferable lower limit of the content of the basic group-containing pigment dispersion agent is 20 parts by mass, while a more preferable upper limit of it is 60 parts by mass.

### (Pigment Dispersion Aid)

The pigment dispersion aid used under the present invention is an acid pigment derivative, preferably phthalocyanine pigment derivative having acid group, anthraquinone pigment derivative having acid group, naphthalene pigment derivative having acid group, or the like. The acid group to be introduced is preferably sulfonic acid group, carboxylic acid group, or phosphoric acid group, or the like.

It should be noted that the pigment dispersion aid dissolves in the organic solvent described later, but not in the insulating solvent.

The content of the pigment dispersion aid is not limited in any way, but preferably it is 0.1 to 10.0 parts by mass relative to 100 parts by mass of the pigment. If its content is less than 0.1 parts by mass, the effects of the present invention may not be obtained; if the content exceeds 10.0 parts by mass, on the other hand, the optical density tends to drop. The more preferable lower limit of the content of the pigment dispersion aid is 0.5 parts by mass, while the more preferable upper limit is 3 parts by mass.

### (Granulating Aid)

For the granulating aid used to obtain colored resin particles, which is for improving the uniformity of the colored resin particles, any carbodiimide compound having at least one carbodiimide group and whose number-averaged molecular weight is 500 to 100,000 can be used. Here, the compatibility of the main binder resin and acid group-containing resin must be increased by introducing a specific amount of the carbodiimide compound relative to the acid group-containing resin, at a time when the acid groups can react with the carbodiimide groups.

Among carbodiimide compounds, carbodiimide compounds whose side chain and/or main chain has a polyester chain and/or polyether chain of 200 to 10,000 in nµumber-averaged molecular weight are preferred.

Carbodiimide compounds having at least one carbodiimide group are compounds whose molecule has at least one carbodiimide group, or specifically a group expressed by -N=C=N-.

It should be noted that the granulating aid dissolves in the organic solvent described later, but not in the insulating solvent.

Carbodiimide compounds include carbodiimide compounds having isocyanate group, carbodiimide compounds obtained by causing the isocyanate group in an isocyanate group-containing carbodiimide compound to react with a compound that can react with the isocyanate group, and carbodiimide group-containing carbodiimide compounds obtained by causing the carbodiimide groups in a carbodiimide compound containing at least two or more carbodiimide groups to react with a compound that can react with the carbodiimide group.

Specific examples are as follows, among others:
(1) Carbodiimide compounds having isocyanate groups at both ends, obtained by putting a diisocyanate compound through decarbonation reaction (Carbodilite V-01, V-03, V-05, etc., all manufactured byNisshinbo);
(2) Carbodiimide compounds obtained by extending the chain of a carbodiimide compound having isocyanate groups at both ends according to (1) using a chain extender that can react with the isocyanate group (2,4-dimethyl-1,5-pentane diol, methyl diethanol amine and other diol compounds, diamine compounds, hydrazine, etc.);
(3) Carbodiimide compounds whose main chain has a polyether chain and/or polyester chain, obtained by causing a carbodiimide compound having isocyanate groups at both ends according to (I) to react with a polyester compound with hydroxyl group of 200 to 14,000 in number-averaged molecular weight (such as polyester compound with hydroxyl group, obtained by putting ε-caprolactone, γ-butyrolactone, etc., through ring-opening polymerization using a low-molecular-weight monool and/or low-molecular-weight diol compound as an initiator; polyester compound containing hydroxyl group, obtained by causing a low-molecular-weight diol compound to react with a low-molecular-weight carboxylic acid compound under excessive presence of a low-molecular-weight compound; polyester compound containing hydroxyl group, obtained by causing monoalcohol to react with hydroxy stearic acid, etc.) and/or polyether compound with hydroxyl group of 200 to 10,000 in number-averaged molecular weight (such as polyether compound with hydroxyl group, obtained by putting alkylene oxide through addition reaction with a low-molecular-weight monool and/or low-molecular-weight diol compound, etc.); and
(4) Carbodiimide compounds whose side chain has a polyether chain and/or polyester chain, obtained by causing the isocyanate groups in a carbodiimide compound having isocyanate groups at both ends according to (1) and also having at least two or more carbodiimide groups, to react with low-molecular-weight alcohol and then causing such carbodiimide compound to react further with a polyester compound with carboxyl group of 200 to 10,000 in number-averaged molecular weight (such as polyester compound with hydroxyl group and carboxyl group, obtained by putting ε-caprolactone, γ-butyrolactone, etc., through ring-opening polymerization using mono- or poly-oxy carboxylic acid as an initiator; polyester compound with hydroxyl group and carboxyl group, obtained by putting hydroxy carboxylic acid through self-condensation, etc.) and/or polyether compound with carboxyl group of 200 to 10000 in number-averaged molecular weight (such as polyether compound with carboxyl group, obtained by putting alkylene oxide through additional reaction using mono- or poly-oxy carboxylic acid as an initiator).

Among the above, carbodiimide compounds whose main chain has a polyether chain and/or polyester chain are preferred.

Under the present invention, all number-averaged molecular weights were obtained based on the gel permeation chromatography (GPC) method (in equivalent polystyrene) using the Water 2690 system (manufactured by Waters) and Plgea 5µ MIXED-D column (manufactured by Polymer Laboratories).

For the content of granulating aid, preferably the granulating aid is blended in such a way that the equivalent weight of carbodiimide groups in the carbodiimide compound relative to the total equivalent weight of acid groups in the binder resin and acid group-containing resin as described below, expressed by "equivalent weight of carbodiimide groups / equivalent weight of acid groups," becomes 0.01 or more but less than 1.

An equivalent carbodiimide weight less than 0.01 is not desirable as it will lead to limited benefits, while an equivalent weight more than 1 is not desirable, either, because the viscosity will increase and cause agitation failure during manufacturing and the particles will become non-uniform.

### (Binder Resin Containing Acid Group-containing Resin)

For the binder resin containing acid group-containing resin, acid group-containing resin may be used alone or acid group-containing resin may be combined with acid group-free resin.

Under the present invention, acid group-containing resin has an acid value of over 0 mg KOH/g but no more than 250 mg KOH/g, while acid group-free resin has an acid value of 0 mg KOH/g.

As acid group-containing resin, resin whose acid value is over 0 mg KOH/g but no more than 20 mg KOH/g may be used with acid group-containing resin whose acid value is over 20 mg KOH/g but no more than 250 mg KOH/g. In particular, it is preferable to use acid group-free resin and/or resin whose acid value is over 0 mg KOH/g but no more than 20 mg KOH/g with acid group-containing resin whose acid value is over 20 mg KOH/g but no more than 250 mg KOH/g, and it is more preferable to use polyester resin whose acid value is over 0 mg KOH/g but no more than 20 mg KOH/g with acid group-containing copolymer resin whose acid value is over 20 mg KOH/g but no more than 250 mg KOH/g.

It should be noted that resin containing acid group-containing resin dissolves in the organic solvent described later, but not in the insulating solvent.

For the resin whose acid value is 0 or more but no more than 20 mg KOH/g, any known binder resin fixable onto paper, plastic film, or other adherend can be used, such as polyester resin, epoxy resin, ester resin, acrylic resin, alkyd resin, rosin modified resin or other resin, where any of these resins may be used alone or two or more types may be combined as necessary. Among these, polyester resin is preferred from the viewpoints of coating film resistance and printability. The content of resin whose acid value is 0 or more but no more than 20 mg KOH/g is not limited in any way, but preferably it is 100 to 1000 parts by mass relative to 100 parts by mass of the pigment.

For the acid group-containing resin whose acid value is over 20 to 250 mg KOH/g, thermoplastic resin fixable onto printing paper or other adherend is preferred. Specific examples include ethylene-(meth)acrylate copolymer, ethylene-vinyl acetate copolymer, partially saponified ethylene-vinyl acetate copolymer, ethylene-(meth)acrylate ester copolymer, polyethylene resin, polypropyrene resin or other olefin resin, thermoplastic saturated polyester resin, styrene-acrylic copolymer resin, styrene-acrylic modified polyester resin or other styrene resin, alkyd resin, phenolic resin, epoxy resin, rosin modified phenolic resin, rosin modified maleate resin, rosin modified fumarate resin, (meth)acrylate ester resin or other acrylic resin, vinyl chloride resin, vinyl acetate resin, vinylidene chloride resin, fluororesin, polyamide resin, polyacetal resin, etc., to which carboxyl group, sulfonate group, phosphate group or other acid group has been introduced using a carboxylic acid compound as polymerization material or addition material or by means of peroxide treatment, etc. Also, one type or two or more types of the foregoing may be used. The aforementioned acid group-containing resin is preferably carboxyl group-containing resin, or more preferably carboxyl group-containing copolymer, or even more preferably styrene-acrylic copolymer.

The content of acid group-containing resin whose acid value is 20 to 250 mg KOH/g is not limited in any way, but this resin is contained in the liquid developer by 0.1 to 10 percent by mass, or preferably by 0.5 to 5 percent by mass, or more preferably 1 to 4 percent by mass.

By using acid group-containing resin whose acid value is 20 to 250 mg KOH/g together, the ease of making colored resin particles by the coacervation method improves further. It should be noted that, with the acid group-containing resin whose acid value is 20 to 250 mg KOH/g, it is not desirable for its acid value to rise to 250 mg KOH/g or more because it may cause the electrophoretic migration property to drop.

### (Particle Dispersion Agent)

The liquid developer may further contain a particle dispersion agent to increase the dispersibility of colored resin particles.

It should be noted that the particle dispersion agent dissolves in the insulating solvent and also in the organic solvent described later.

The particle dispersion agent dissolves in the insulating liquid to increase the dispersibility of colored resin particles, and may be a reaction product of polyamine compound and hydroxy carboxylic acid self-condensation product, for example. When the liquid developer is manufactured using the coacervation method described later, the colored resin particles are dispersed in the insulating solvent in the co-presence of this particle dispersion agent and aforementioned acid group-containing resin, as this allows the dispersion stability of colored resin particles to increase in the insulating solvent. The charging characteristics and electrophoretic migration property of colored resin particles can also be improved.

Preferably the particle dispersion agent has an amine value of 5 to 300 mg KOH/g. So long as the amine value is within this range, the colored resin particles have good dispersion stability and also present excellent charging characteristics. It should be noted that, in this Specification for the present application, the "amine value" refers to an equivalent weight (mg) in potassium hydroxide obtained by converting the amine value per 1 g of solid content of particle dispersion agent as measured using 0.1 N aqueous solution of hydrochloric acid according to the potentiometric titration method (such as COMTITE (Auto Titrator COM-900, Buret B-900, Tit-station K-900), manufactured by Hiranuma Sangyo).

The polyamine compound is not limited in any way and may be, for example, polyvinyl amine polymer, polyallyl amine polymer, polydiallyl amine polymer, diallyl amine-maleate copolymer, etc., as well as polymers being the aforementioned polymers containing polyaniline unit, polypyrrole unit, etc. The aforementioned polyamine compound may also be ethylene diamine or other aliphatic polyamine, cyclopentane diamine or other alicyclic polyamine, phenylene diamine or other aromatic polyamine, xylene diamine or other aromatic-aliphatic polyamine, hydrozine or derivative thereof, etc. Among these, polyallyl amine polymer is preferred.

The hydroxy carboxylic acid constituting the hydroxy carboxylic acid selfcondensation product is not limited in any way and may be, for example, glycolic acid, lactic acid, oxy butyric acid, hydroxy valeric acid, hydroxy caproic acid, hydroxy caprylic acid, hydroxy capric acid, hydroxy lauric acid, hydroxy myristic acid, hydroxy palmitic acid, hydroxy stearic acid, ricinoleic acid, castor oil fatty acid, or hydrogenated product thereof. It is preferably hydroxy carboxylic acid having 12 to 20 carbon atoms, or more preferably 12-hydroxy carboxylic acid having 12 to 20 carbon atoms, or even more preferably 12-hydroxy stearic acid.

Favorable particle dispersion agents include, among others, reaction product of polyamine compound and hydroxy stearic acid self-condensation product, or specifically reaction product of polyallyl amine and 12-hydroxy stearic acid selfcondensation product, reaction product of polyethylene polyamine and 12-hydroxy stearic acid self-condensation product, reaction product of dialkyl aminoalkyl amine and 12-hydroxy stearic acid self-condensation product, reaction product of polyvinyl amine and 12-hydroxy stearic acid self-condensation product, or other reaction product of polyamine compound and 12-hydroxy stearic acid self-condensation product. Commercially available products of the particle dispersion agent include, for example, Ajisper PB817 (manufactured by Ajinomoto) and Solsperse 11200, 13940, 17000, 18000 (manufactured by Lubrizol Japan), etc. Among these, reaction product of polyallyl amine and 12-hydroxy stearic acid self-condensation product is preferred, as it is suitable due to good particle dispersibility, as well as excellent charging characteristics, in its initial state and over long-term preservation.

Under the present invention, one type or two or more types of any such particle dispersion agent(s) may be used, and the content of particle dispersion agent is preferably 0.5 to 3.0 percent by mass in the liquid developer.

### (Resin and/or Wax of -120°C to -60°C in Glass Transition Temperature)

To improve the friction resistance of liquid developer, preferably the colored resin particles contain resin and/or wax of -120°C to -60°C in glass transition temperature.

It should be noted that the resin and/or wax of -120°C to -60°C in glass transition temperature dissolves in the organic solvent described later, but not in the insulating solvent.

The aforementioned resin is a resin of polyester structure and/or polyether structure, for example, but it is preferably at least one type or more selected from polyester polyol, polyether polyol, and polyester polyether polyol, among others, of which polyester polyol is preferred.

The content of resin of -120°C to -60°C in glass transition temperature is adjusted to 1.0 to 5.0 percent by mass, or more preferably to 1.0 to 3.0 percent by mass, in the colored resin particle. So long as this content is in a range of 1.0 to 5.0 percent by mass, the printed surface will not separate after development.

As for the wax, preferably it is oxidized polyethylene wax whose acid value is in a range of 0.5 to 20 mg KOH/g. The wax is used preferably by a range of 0.1 to 10 percent by mass per 100 percent by mass of total solid content in the liquid developer.

For this oxidized polyethylene wax, preferably one treated in the presence of a compound with basic group is used in order to improve the electrophoretic migration property and improve the friction resistance of the printed product that has been printed with the liquid developer. For the oxidized polyethylene wax treated in the presence of a compound with basic group, one produced by mixing oxidized polyethylene and a compound with basic group under agitation in an insulating solvent is used. The aforementioned agitation mixture may be produced by mixing oxidized polyethylene and compound with basic group under agitation in an insulating solvent beforehand, or it may also be possible to have polyethylene wax already contained in the colored resin particles when they are formed by the coacervation method described below (where the pigment dispersion agent or particle dispersion agent is a dispersion agent with basic group (compound with basic group)) and then mix oxidized polyethylene and dispersion agent with basic group under agitation in an insulating solvent during the course of manufacturing.

### (Charge-controlling agent)

The liquid developer may further contain a charge-controlling agent, ifnecessary. For the charge-controlling agent, one of the two representative types (1) and (2) explained below can be used.
(1) Type that coats the surface of colored resin particles with an ionized substance or substance capable of adsorbing ions
   Suitable charge-controlling agents of this type include, for example, linseed oil, soybean oil or other oil, alkyd resin, halogenated polymer, aromatic polycarboxylic acid, acid group-containing water-soluble dye, aromatic polyamine oxidative condensation product, and the like.
(2) Type that dissolves in an insulating liquid to provide a coexisting substance capable of exchanging ions with the colored resin particles

Suitable charge-controlling agents of this type include, for example, cobalt naphthenate, nickel naphthenate, iron naphthenate, zinc naphthenate, cobalt octylate, nickel octylate, zinc octylate, cobalt dodecylate, nickel dodecylate, zinc dodecylate, cobalt 2-ethyl hexanoate or other metallic soaps, petroleum sulfonate metallic salt, metallic salt of sulfosuccinate ester or other sulfonate metallic salts, lecithin or other phospholipids, t-butyl salicylate metallic complex or other salicylate metallic salts, polyvinyl pyrrolidone resin, polyamide resin, sulfonate-containing resin, hydroxy benzoate derivative, and the like.

### (Insulating Solvent)

For the insulating solvent, one that does not dissolve the aforementioned binder resin containing acid group-containing resin, basic group-containing pigment dispersion agent (excluding the granulating aid), granulating aid, and resin or wax of -120°C to-60°C in glass transition temperature, while having electrical insulation property, is preferred. Insulating solvents meeting these conditions include non-volatile insulating hydrocarbons, or more preferably aliphatic hydrocarbons and alicyclic hydrocarbons. Among these, normal paraffin compounds, isoparaffin compounds, cycloparaffin compounds, and mixtures of two or more types of the foregoing, or other paraffin solvents of high boiling point (boiling point of 150°C or above) are particularly preferred from the viewpoints of odor, non-orientation, and cost. Specific commercially available products of the foregoing include, for example, Isopar G, Isopar H, Isopar L, Isopar M, Exxsol D80, Exxsol D110 (all manufactured by ExxonMobil), Shellsol TM (manufactured by Shell Chemicals), IP Solvent 1620, IP Solvent 2028, IP Solvent 2835 (all manufactured by Idemitsu Petrochemical), MORESCO White P-40, MORESCO White P-55, MORESCO White P-80 (all are liquid paraffins manufactured by MORESCO), Liquid Paraffin No. 40-S, Liquid Paraffin No. 55-S (both are liquid paraffins manufactured by Chuo Kasei), and the like.

### (Other Additives Used As Necessary)

The liquid developer can also be blended with other additives, as necessary, in connection with its use for printing presses, copiers, printers, facsimiles, etc.

Next, how the liquid developer proposed by the present invention is manufactured per the coacervation method is explained. The liquid developer proposed by the present invention can be manufactured per the coacervation method by means of known processes, such as those described in Japanese Patent Laid-open No. 2003-241439 and Re-publication of International Patent Laid-open Nos. WO 2007/000974, WO 2007/000975.

The manufacturing method of liquid developer is explained below in greater detail. It should be noted, however, that the manufacturing method explained below is only one example of a preferred embodiment of the present invention and that the present invention is not limited to this method.

The organic solvent used in the liquid developer to be manufactured per the coacervation method below is an organic solvent that dissolves the aforementioned binder resin containing acid group-containing resin, basic group-containing pigment dispersion agent, pigment dispersion aid which is an acid pigment derivative, granulating aid, resin or wax of -120°C to -60°C in glass transition temperature, and a particle dispersion agent. Examples include tetrahydrofuran and other ethers, methyl ethyl ketone, cyclohexanone and other ketones, ethyl acetate and other esters, toluene, benzene, and other aromatic hydrocarbons. These may be used alone or two or more types may be used together.

It is also possible to use other known granulation methods instead of the coacervation method, in which case due attention must be paid to prevent the pigment from being exposed on the surface of the obtained resin particles.

The specific manufacturing method starts with mixing the pigment, basic group-containing pigment dispersion agent, pigment dispersion aid which is an acid pigment derivative, and part of the organic solvent, after which an attritor, ball mill, sand mill, bead mill or other media dispersion machine, or high-speed mixer, high-speed homogenizer or other non-media dispersion machine, is used to obtain a pigment dispersion liquid in which the pigment has been dispersed. Next, the binder resin containing acid group-containing resin, granulating aid, and if necessary, resin or wax of -120°C to -60°C in glass transition temperature, and other additives, and remaining organic solvent, are added to this pigment dispersion liquid. More preferably the particle dispersion agent is added thereafter and then the insulating solvent is added under agitation using a high-speed shearing/agitation machine, to obtain a mixed liquid. It should be noted that, when the pigment dispersion liquid is prepared, the resin containing acid group-containing resin and resin or wax of -120°C to -60°C in glass transition temperature can be added first and the pigment can be dispersed thereafter.

Next, the organic solvent is distilled away while agitating the mixed liquid using a high-speed shearing/agitation machine, to obtain the liquid developer under the present invention. If the concentration of solid content in the obtained liquid developer is high, insulating solvent may be added to achieve the required concentration of solid content. Furthermore, charge-controlling agent and other additives may be added as necessary. The liquid developer proposed by the present invention can also be obtained by distilling away the organic solvent and adding the insulating solvent simultaneously.

For the aforementioned high-speed shearing/agitation machine, a homogenizer, homo-mixer, or other machine capable of applying agitation/shearing force can be utilized. Such machines vary in capacity, rotational speed, model, etc., but any machine can be used as deemed appropriate according to the production mode. If a homogenizer is used, preferably the rotational speed is 500 revolutions per minute (rpm) or above.

### (Examples)

The liquid developer proposed by the present invention is explained more specifically using examples below; however, the present invention is not limited to these examples so long as its purpose and scope are preserved. It should be noted that, in the descriptions below, "part" and "percent" refer to "parts by mass" and "percent by mass," respectively," unless otherwise specified.

### <Binder Resin Containing Acid Group>

- Polyester resin: Iso/terephthalic acid, trimellitic acid, bisphenol A, Mw: 90,000, Tg: 64°C, AV: 5, OHV: 47
- Styrene/stearyl acrylate/acrylic acid = 56/30/14

### (Weight-average molecular weight 68000, Theoretical acid value 75 KOH mg/g)

Monomers of the aforementioned compositions (mol ratios) were put through polymerization reaction to obtain a resin containing styrene-acrylic copolymer.

### <Pigment>

Acid carbon black of pH2.8

### <Basic Group-containing Pigment Dispersion Agent>

PB-821 (Amine dispersion agent manufactured by Ajinomoto Fine)

### <Pigment Dispersion Aid>

Solsperse 1 2000 (Phthalocyanine acid pigment derivative, manufactured by Lubrizol)

### <Granulating Aid>

Into a four-way flask equipped with a reflux cooling tube, nitrogen gas introduction tube, agitation bar, and thermometer, 1823 parts of Carbodilite V-01 (solid content 50%) and 2197 parts of polycaprolactone diol (Mw 1000) were introduced and held for 3 hours at approx. 110°C to cause the isocyanate groups to react with the hydroxyl groups, after which toluene was distilled out under reduced pressure and then 3109 parts of methyl ethyl ketone was introduced to obtain a granulating aid (50% solution).

### <Particle Dispersion Agent>

PB817 (Reaction product of polyamine compound and hydroxy carboxylic acid condensation product, manufactured by Ajinomoto Fine)

### <Organic Solvent>

Methyl ethyl ketone (MEK)

### <Insulating Solvent>

IP Solvent 2028 (Normal paraffin)

### <Charge-Controlling Agent>

### t-butyl salicylate chromium salt

### (Reference Example 1)

After mixing 25.00 parts of acid carbon black as pigment, 10.00 parts of basic group-containing pigment dispersion agent (PB-821) and 65.00 parts of methyl ethyl ketone, the mixture was kneaded for 15 minutes in a paint shaker using steel beads of 5 mm in diameter, and then kneaded further for 2 hours in an Eiger Motor Mill M-250 (manufactured by Eiger Japan) using zirconia beads of 0.05 mm in diameter, to obtain mill base 1.

To 26.00 parts of this mill base 1, 22.90 parts of polyester resin as acid group-containing resin, 1.50 parts of styrene-acrylic copolymer-containing resin as acid group-containing resin, 2.20 parts of granulating aid (solid content 50%, solvent: methyl ethyl ketone), and 94.45 parts of methyl ethyl ketone, were added and the mixture was agitated under heating at 50°C.

Thereafter, 1.15 parts of particle dispersion agent (PB817) (solid content 50%, solvent: IP Solvent 2028) was added and the mixture was agitated, after which 62.247 parts of insulating solvent (IP Solvent 2028) was added under agitation to dilute the mixture, to obtain a mixed liquid. Next, using a system constructed by connecting a solvent distillation device to (a pressure reducing device of) a homogenizer comprised of a sealed agitation tank, the mixed liquid was agitated at high speed (rotational speed 5000 rpm) in the homogenizer, while at the same time the temperature of the mixed liquid was raised to 50°C by a pressure reducing device, after which the pressure was reduced and methyl ethyl ketone was completely distilled out from the sealed agitation tank, followed by addition, under agitation, of 0.003 parts of charge-control ling agent, to obtain the liquid developer of Reference Example 1.

### (Example 1)

After mixing 24.75 parts of acid carbon black as pigment, 10.00 parts of basic group-containing pigment dispersion agent (PB-821), 0.250 parts of acid pigment derivative (Solsperse 12000, manufactured by Lubrizol) which is pigment dispersion aid, and 65.00 parts of methyl ethyl ketone, the mixture was kneaded for 15 minutes in a paint shaker using steel beads of 5 mm in diameter, and then kneaded further for 2 hours in an Eiger Motor Mill M-250 (manufactured by Eiger Japan) using zirconia beads of 0.05 mm in diameter, to obtain mill base 2.

To 30.00 parts of this mill base 2, 21.50 parts of polyester resin as acid group-containing resin, 1.50 parts ofstyrene-acrylic copolymer-containing resin as acid group-containing resin, 2.20 parts of granulating aid (solid content 50%, solvent: methyl ethyl ketone), and 91.85 parts of methyl ethyl ketone, were added and the mixture was agitated under heating at 50°C.

Thereafter, 1.15 parts of particle dispersion agent PB817 (solid content 50%, solvent: IP Solvent 2028) was added and the mixture was agitated, after which 64.247 parts of IP Solvent 2028 as insulating solvent was added under agitation to dilute the mixture, to obtain a mixed liquid. Next, using a system constructed by connecting a solvent distillation device to (a pressure reducing device of) a homogenizer comprised of a sealed agitation tank, the mixed liquid was agitated at high speed (rotational speed 5000 rpm) in the homogenizer, while at the same time the temperature of the mixed liquid was raised to 50°C by a pressure reducing device, after which the pressure was reduced and methyl ethyl ketone was completely distilled out from the sealed agitation tank, followed by addition, under agitation, of 0.003 parts of charge-controlling agent, to obtain the liquid developer of Example 1.

### (Example 2)

After mixing 24.75 parts of acid carbon black as pigment, 10.00 parts of basic group-containing pigment dispersion agent (PB-821), 0.12 parts of acid pigment derivative (Solsperse 12000, manufactured by Lubrizol) which is pigment dispersion aid, and 65.13 parts of methyl ethyl ketone, the mixture was kneaded for 15 minutes in a paint shaker using steel beads of 5 mm in diameter, and then kneaded further for 2 hours in an Eiger Motor Mill M-250 (manufactured by Eiger Japan) using zirconia beads of 0.05 mm in diameter, to obtain mill base 3.

To 30.00 parts of this mill base 3, 21.50 parts of polyester resin as acid group-containing resin, 1.50 parts of styrene-acrylic copolymer-containing resin as acid group-containing resin, 2.20 parts of granulating aid (solid content 50%, solvent: methyl ethyl ketone), and 91.85 parts of methyl ethyl ketone, were added and the mixture was agitated under heating at 50°C.

Thereafter, 1.15 parts of particle dispersion agent PB817 (solid content 50%, solvent: IP Solvent 2028) was added and the mixture was agitated, after which 64.247 parts of IP Solvent 2028 as insulating solvent was added under agitation to dilute the mixture, to obtain a mixed liquid. Next, using a system constructed by connecting a solvent distillation device to (a pressure reducing device of) a homogenizer comprised of a sealed agitation tank, the mixed liquid was agitated at high speed (rotational speed 5000 rpm) in the homogenizer, while at the same time the temperature of the mixed liquid was raised to 50°C by a pressure reducing device, after which the pressure was reduced and methyl ethyl ketone was completely distilled out from the sealed agitation tank, followed by addition, under agitation, of 0.003 parts of charge-controlling agent, to obtain the liquid developer of Example 2.

### (Example 3)

After mixing 24.75 parts of acid carbon black as pigment, 10.00 parts of basic group-containing pigment dispersion agent (PB-821), 0.74 parts of acid pigment derivative (Solsperse 12000, manufactured by Lubrizol) which is pigment dispersion aid, and 64.51 parts of methyl ethyl ketone, the mixture was kneaded for 15 minutes in a paint shaker using steel beads of 5 mm in diameter, and then kneaded further for 2 hours in an Eiger Motor Mill M-250 (manufactured by Eiger Japan) using zirconia beads of 0.05 mm in diameter, to obtain mill base 4.

To 30.00 parts of this mill base 4, 21.50 parts of polyester resin as acid group-containing resin, 1.50 parts of styrene-acrylic copolymer-containing resin as acid group-containing resin, 2.20 parts of granulating aid (solid content 50%, solvent: methyl ethyl ketone), and 91.85 parts of methyl ethyl ketone, were added and the mixture was agitated under heating at 50°C.

Thereafter, 1.15 parts of particle dispersion agent PB817 (solid content 50%, solvent: IP Solvent 2028) was added and the mixture was agitated, after which 64.247 parts of IP Solvent 2028 as insulating solvent was added under agitation to dilute the mixture, to obtain a mixed liquid. Next, using a system constructed by connecting a solvent distillation device to (a pressure reducing device of) a homogenizer comprised of a sealed agitation tank, the mixed liquid was agitated at high speed (rotational speed 5000 rpm) in the homogenizer, while at the same time the temperature of the mixed liquid was raised to 50°C by a pressure reducing device, after which the pressure was reduced and methyl ethyl ketone was completely distilled out from the sealed agitation tank, followed by addition, under agitation, of 0.003 parts of charge-controlling agent, to obtain the liquid developer of Example 3.

### (Example 4)

After mixing 24.75 parts of acid carbon black as pigment, 10.00 parts of basic group-containing pigment dispersion agent (PB-821), 2.48 parts of acid pigment derivative (Solsperse 12000, manufactured by Lubrizol) which is pigment dispersion aid, and 62.77 parts of methyl ethyl ketone, the mixture was kneaded for 15 minutes in a paint shaker using steel beads of 5 mm in diameter, and then kneaded further for 2 hours in an Eiger Motor Mill M-250 (manufactured by Eiger Japan) using zirconia beads of 0.05 mm in diameter, to obtain mill base 5.

To 30.00 parts of this mill base 5, 21.50 parts of polyester resin as acid group-containing resin, 1.50 parts of styrene-acrylic copolymer-containing resin as acid group-containing resin, 2.20 parts of granulating aid (solid content 50%, solvent: methyl ethyl ketone), and 91.85 parts of methyl ethyl ketone, were added and the mixture was agitated under heating at 50°C.

Thereafter, 1.15 parts of particle dispersion agent PB817 (solid content 50%, solvent: IP Solvent 2028) was added and the mixture was agitated, after which 64.247 parts of IP Solvent 2028 as insulating solvent was added under agitation to dilute the mixture, to obtain a mixed liquid. Next, using a system constructed by connecting a solvent distillation device to (a pressure reducing device of) a homogenizer comprised of a sealed agitation tank, the mixed liquid was agitated at high speed (rotational speed 5000 rpm) in the homogenizer, while at the same time the temperature of the mixed liquid was raised to 50°C by a pressure reducing device, after which the pressure was reduced and methyl ethyl ketone was completely distilled out from the sealed agitation tank, followed by addition, under agitation, of 0.003 parts of charge-controlling agent, to obtain the liquid developer of Example 4.

### (Comparative Example 1)

To 30.00 parts of mill base 1 obtained in Reference Example 1 above, 21.50 parts of polyester resin as acid group-containing resin, 1.50 parts of acid group-containing acrylic resin as acid group-containing resin, 2.20 parts of granulating aid (solid content 50%, solvent: methyl ethyl ketone), and 91.855 parts of methyl ethyl ketone, were added and the mixture was agitated under heating at 50°C.

Thereafter, 1.15 parts of particle dispersion agent PB817 (solid content 50%, solvent: IP Solvent 2028) was added and the mixture was agitated, after which 64.247 parts of IP Solvent 2028 as insulating solvent was added under agitation to dilute the mixture, to obtain a mixed liquid. Next, using a system constructed by connecting a solvent distillation device to (a pressure reducing device of) a homogenizer comprised of a sealed agitation tank, the mixed liquid was agitated at high speed (rotational speed 5000 rpm) in the homogenizer, while at the same time the temperature of the mixed liquid was raised to 50°C by a pressure reducing device, after which the pressure was reduced and methyl ethyl ketone was completely distilled out from the sealed agitation tank, followed by addition, under agitation, of 0.003 parts of charge-controlling agent, to obtain the liquid developer of Comparative Example 1.

### <Evaluation Methods>

The liquid developers of Examples 1 to 4, Comparative Example 1, and Reference Example 1 were evaluated according to the evaluation methods below, the results of which are shown in Table 1.

### (Electrophoretic Migration Property)

Particles were observed using a migration cell to check their electrophoretic migration property. (Conditions - Distance between electrodes: 80 µm, Impression voltage: 200 V)
○: Particles migrated smoothly without aggregating together.
Δ: Particles migrated while aggregating together somewhat.
X: Particles migrated while forming aggregates.

### (Optical Density (OD Value))

Each liquid developer was supplied between rollers and then an impression voltage was applied to cause the particles in the liquid developer to migrate electrophoretically, after which the liquid developer on the roll on the negative electrode side was transferred onto paper and then dried for 30 minutes in a 120°C oven; thereafter, the optical density (OD value) was measured using a Macbeth densitometer (product name: TD-931, manufactured by Macbeth).

**[Table 1]**

| Material | | | Mill base 1 | Mill base 2 | Mill base 3 | Mill base 4 | Mill base 5 |
|---|---|---|---|---|---|---|---|
| Pigment | Acid carbon black | | 25 | 24.75 | 24.75 | 24.75 | 24 75 |
| Piment dispersion aid | Solsperse 12000 | L ubrizol | | 0.25 | 0.12 | 074 | 248 |
| Pigment dispersion agent | PB821 | Ajinomoto FC | 10 | 10 | 10 | 10 | 10 |
| Solvent | MEK | | 65 | 65 | 65 13 | 64 51 | 6277 |
| Subtotal | | | 100 | 100 | 100 | 100 | 100 |

**[Table 2]**

| | | | Reference Example 1 | Comparative Example 1 | Example 1 | Example 2 | Example 3 | Example 4 |
|---|---|---|---|---|---|---|---|---|
| Mill base | Mill base 1 | | 26 | 30 | | | | |
| | Mill base 2 | | | | 30 | | | |
| | Mill base 3 | | | | | 30 | | |
| | Mill base 4 | | | | | | 30 | |
| | Mill base 5 | | | | | | | 30 |
| Acid group-containing acrylic resin | | | 1.5 | 1.5 | 1.5 | 1.5 | 1.5 | 1.5 |
| Polyester resin | | | 229 | 21.5 | 21.5 | 21.5 | 21.5 | 21.5 |
| Polyester polyol | | | | | | | | |
| Granulating aid | | | 22 | 2.2 | 2.2 | 2.2 | 2.2 | 2.2 |
| Particle dispersion agent | PB817 | Ajinomoto | 2.3 | 2.3 | 23 | 2.3 | 2.3 | 23 |
| Insulating solvent | IP Solvent 2028 | Idemitsu Kosan | 63047 | 63 047 | 63 047 | 63 047 | 63 047 | 63047 |
| Solvent | MEK | | 94.45 | 94.45 | 94.45 | 94.45 | 94.45 | 94.45 |
| Desolvent | | | 112.45 | 112.45 | 112.45 | 112.45 | 112.45 | 112.45 |
| Charge-controlling agent | | Salicylate chromium salt | 0.0003 | 0 0003 | 0 003 | 0.0003 | 00003 | 00003 |
| Total | | | 100 | 100 | 100 | 100 | 100 | 100 |
| Toner performance | Electrophoretic migration property | Microscopic observation | ○ | Δ | ○ | ○ | ○ | ○ |
| | OD value | Measured value | 10 | 0.8 | 1.2 | 1.2 | 1.2 | 1.1 |

According to Example 1 where a specified amount of pigment dispersion aid, which is the acid pigment derivative proposed by the present invention, was used, the toner performance based on the liquid developer proposed by the present invention was such that the particles migrated smoothly without aggregating together and the optical density was also high, which was sufficiently excellent for a liquid developer. This is because the colored resin particles contained in the liquid developer of the present invention have uniform particle size, and also because the pigment is not exposed to the surface. Additionally, compared to Reference Example 1, Example 1 achieves sufficient electrophoretic migration property and higher optical density even when the pigment concentration is raised.

On the other hand, Comparative Example 1, where no pigment dispersion aid was used, achieved insufficient performance as a liquid developer, with the particles in the obtained liquid developer migrating while aggregating together somewhat and the optical density also remaining low.

## Claims

1. A liquid developer that contains colored resin particles granulated by utilizing a coacervation method, from at least an acid carbon black as pigment, binder resin containing acid group-containing resin, basic group-containing pigment dispersion agent, pigment dispersion aid which is an acid pigment derivative and accounts for 0.1 to 10.0 parts by mass per 100 parts by mass of the pigment, and granulating aid, wherein the colored resin particles are dispersed in an insulating solvent by means of a particle dispersion agent.

2. A liquid developer according to Claim I, **characterized in that** the acid pigment derivative is constituted by at least one type of derivative selected from among anthraquinone acid pigment derivative, naphthalene acid pigment derivative, and phthalocyanine acid pigment derivative.
